# FASCICULE DE BREVET EUROPEEN

(11) **EP 3 186 134 B1**
(45) Date de publication et mention de la délivrance du brevet: **12.09.2018**
(21) Numéro de dépôt: 15759508.3
(22) Date de dépôt: 10.07.2015
(51) Int. Cl.: B62D 25/08, B62D 27/02, B62D 29/00

(54) **ASSEMBLAGE ROBUSTE D'INSERTS DE RENFORT PAR UN MATÉRIAU POLYMÈRE, SANS SOUDAGE OU VISSAGE DES INSERTS**
ROBUSTE ANORDNUNG VON VERSTÄRKUNGSELEMENTEN DURCH EIN POLYMERMATERIAL OHNE SCHWEISS- ODER SCHRAUBEINSÄTZE
STURDY ASSEMBLY OF REINFORCEMENT ELEMENTS BY A POLYMER MATERIAL, WITH NO WELDING OR SCREWING OF INSERTS

(30) Priorité: 28.08.2014 FR 1458075
(43) Date de publication de la demande: 05.07.2017
(73) Titulaire: Renault S.A.S., 92100 Boulogne-Billancourt (FR)
(72) Inventeur: AESCHLIMANN, Jean-louis, F-78390 Bois d'Arcy (FR); FLANDIN, Michael, F-28410 Broue (FR)
(86) Numéro de dépôt international: PCT/FR2015/051914
(87) Numéro de publication internationale: WO 2016/030591

(56) Documents cités:
- EP-A1- 1 547 909
- EP-A1- 1 607 311
- EP-A1- 1 607 312
- WO-A1-2005/016724
- US-A1- 2004 105 949
- US-A1- 2011 133 517

## Description

L'invention concerne un assemblage robuste d'inserts de renfort par un matériau polymère, sans soudage ou vissage de ces derniers. En particulier, les inserts de renfort sont assemblés uniquement par le matériau polymère les recouvrant au moins partiellement. Le US 2004/105949 A1 divulgué un assemblage d'un premier élément longitudinal et d'un deuxième élément longitudinal par un matériau polymère selon le préambule de la revendication 1. Plus particulièrement, l'assemblage selon l'invention fait partie d'une face avant technique de véhicule automobile, notamment de la partie supérieure de celle-ci.

On appelle dans le métier « face avant technique » (FAT) une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air (Refroidisseur Air Suralimentation- RAS) et du condenseur. La FAT intègre en outre différentes fonctions telles que support de butées de capot, support de serrure de capot ou d'un jambage supportant la serrure de capot, etc.

Pour un gain en compacité et en masse, certaines FAT forment un cadre obtenu par assemblage de deux traverses par des montants verticaux, ce cadre comprenant des inserts de renfort recouverts au moins partiellement de matériau polymère.

Pour assurer la rigidité d'un tel cadre, il s'avère nécessaire d'assembler les inserts de renfort entre eux. Cette fixation peut être réalisée avant de recouvrir les inserts d'un matériau polymère, par exemple par soudage, vissage ou rivetage, ou après, généralement par vissage ou rivetage. Ces opérations de fixation nécessitent cependant des opérations de positionnement et de fixation qui complexifient le procédé d'assemblage et augmentent les coûts d'assemblage.

Certaines solutions consistent à créer une zone de recouvrement et d'encastrement des inserts avant de les recouvrir de matériau polymère, cette zone d'encastrement présentant une forme en T. Cette solution permet d'obtenir un assemblage robuste sans opération de soudage, vissage ou rivetage, mais résulte en un assemblage volumineux et lourd.

D'autres solutions consistent à réaliser une structure en deux parties distinctes inférieure et supérieure, chaque partie comprenant des portions de montants verticaux. Un tel assemblage est cependant volumineux et les deux parties ne sont pas reliées entre elles.

Une autre solution consiste enfin à positionner les inserts de sorte qu'ils ne se touchent pas et à les enrober de matériaux polymère. La tenue mécanique de cet assemblage résulte alors uniquement du matériau polymère reliant les inserts et est relativement limitée.

Il existe donc un besoin pour un assemblage robuste et léger d'inserts de renfort, qui peut être réalisé de manière simple et peu coûteuse.

L'invention vise à pallier ces inconvénients en proposant un assemblage d'un premier insert de renfort longitudinal et d'un deuxième insert de renfort longitudinal par un matériau polymère les recouvrant au moins partiellement, chaque insert de renfort présentant une paroi de fond et deux parois latérales, chaque paroi latérale étant reliée à un bord longitudinal de la paroi de fond de sorte qu'un insert de renfort présente une section transversale ouverte concave, notamment sensiblement en forme de U ou Ω, les directions longitudinales desdits inserts de renfort étant sensiblement perpendiculaires, caractérisé en ce qu'une extrémité du premier insert de renfort présente au moins deux pattes de maintien coopérant avec une extrémité du deuxième insert de renfort afin de bloquer tout mouvement de ce dernier suivant la direction longitudinale du premier insert de renfort et en ce que ledit matériau polymère recouvre lesdits inserts de renfort au moins au niveau de leurs extrémités en contact.

Autrement dit, les pattes de maintien sont entièrement recouvertes de matériau polymère.

L'agencement selon l'invention permet de renforcer la liaison entre les deux inserts de renfort sans nécessiter de moyen de fixation spécifique, notamment du type vis, rivet, soudage, les inserts n'étant maintenus l'un contre l'autre que par le matériau polymère les recouvrant. Le positionnement relatif des deux inserts de renfort peut en effet être réalisé lors de leur mise en place dans l'outillage permettant de surmouler le matériau polymère. En outre, la liaison renforcée étant très localisée, au niveau des pattes de maintien, l'assemblage selon l'invention n'entraîne pas d'augmentation notable du poids de l'ensemble.

L'assemblage selon l'invention peut en outre présenter une ou plusieurs des caractéristiques suivantes :
- les inserts de renfort peuvent être orientés de sorte que leur concavité soit dirigée dans une même direction, ceci afin de faciliter les opérations de surmoulage du matériau polymère assurant la cohésion de l'ensemble.
- Les pattes de maintien peuvent être en appui plan contre les parois latérales du deuxième insert de renfort. Ceci permet de réaliser de manière simple et avec peu de matière le blocage en translation du deuxième insert de renfort. Notamment ces pattes de maintien peuvent être en appui plan contre une face située du côté convexe du deuxième insert de renfort. Ceci peut permettre de faciliter le positionnement relatif des deux inserts de renfort. L'extrémité du premier insert de renfort peut ainsi définir un logement recevant l'extrémité du deuxième insert de renfort.
- Une partie de la paroi de fond de ladite extrémité du premier insert de renfort peut être en appui plan contre une partie de la paroi de fond de ladite extrémité du deuxième insert de renfort, du côté convexe de ce dernier. Ceci permet de bloquer une rotation du deuxième insert de renfort autour de son axe longitudinal. En outre, la translation suivant une direction perpendiculaire à ces parois de fond est bloquée dans un sens. Un tel agencement participe ainsi au maintien des deux inserts de renfort l'un par rapport à l'autre. Par ailleurs, ces parties de fond superposées peuvent servir ultérieurement de support à un moyen de fixation, tel que vis, rivet, de l'assemblage à une structure externe.
- Au moins une patte de maintien, notamment une seule, peut être solidaire de chacune des parois latérales du premier insert de renfort. Cet agencement permet de bloquer une rotation par rapport à un axe sensiblement perpendiculaire aux parois latérales de ce premier insert de renfort. Notamment, les pattes de maintien peuvent être venues de matière avec les parois latérales dont elles sont solidaires.
- Une partie de la paroi latérale de l'extrémité du premier insert de renfort peut s'étendre en regard de l'extrémité du deuxième insert de renfort, sensiblement perpendiculairement à la direction longitudinale de ce dernier, l'autre paroi latérale de ladite extrémité du premier insert de renfort s'étendant sensiblement perpendiculairement à une paroi latérale du deuxième insert de renfort, en butée contre celle-ci. Les extrémités des deux inserts de renfort sont alors emboîtées l'une dans l'autre, augmentant la robustesse de la liaison. Chaque patte de maintien peut alors être solidaire d'un bord d'une paroi latérale du premier insert de renfort, lesdites parois latérales présentant une différence de longueur correspondant sensiblement à la distance séparant les parois latérales du deuxième insert de renfort mesurée parallèlement à la direction longitudinale du premier insert de renfort. Un tel emboîtement avec contact permet d'améliorer la résistance de la liaison.
- Les pattes de maintien peuvent s'étendre dans une même direction. Ceci permet de simplifier leur réalisation.
- les inserts de renfort peuvent être métalliques, on parle alors d'assemblage hybride, ou en matériau polymère. Les inserts de renfort peuvent par exemple être en aluminium, en alliage à base d'aluminium ou en acier, notamment en acier inoxydable. Ils peuvent également être en polypropylène ou polyamide, éventuellement renforcé, par exemple par des fibres de verre, des fibres de carbone ou autres, ou tout autre matériau polymère présentant la rigidité recherchée.
- Le matériau polymère enrobant au moins partiellement les inserts de renfort peut être du polypropylène ou un polyamide.

L'invention concerne également une face avant technique de véhicule automobile comprenant au moins un assemblage selon l'invention, dans laquelle le deuxième insert de renfort de l'assemblage forme une traverse horizontale, notamment supérieure, et le premier insert de renfort de l'assemblage forme un montant vertical. Notamment, un autre premier insert de renfort peut former un deuxième montant vertical de la FAT, solidarisé au même deuxième insert de renfort que le premier insert de renfort. Le deuxième insert de renfort est alors assemblé à son autre extrémité à l'autre premier insert de renfort de la même manière que pour le premier insert de renfort déjà mentionné, autrement dit ces deux inserts de renfort forment un assemblage selon l'invention. En variante, la FAT pourrait comprendre une autre traverse horizontale, notamment inférieure, solidarisée de la même manière aux deux premiers inserts de renfort verticaux.

L'invention est maintenant décrite en référence aux dessins annexés, non limitatifs, dans lesquels :
- la figure 1 représente une vue en perspective partielle de deux inserts de renfort d'un assemblage selon un mode de réalisation de l'invention, avant leur positionnement relatif ;
- la figure 2 représente une vue en perspective partielle des mêmes inserts de renfort, du côté de leur concavité, après leur positionnement relatif ;
- la figure 3 est une vue similaire à la vue de la figure 2, les inserts de renfort étant vus du côté de leur convexité ;
- la figure 4 est une vue similaire à la vue de la figure 2, les inserts de renfort étant partiellement recouvert de matériau polymère afin de former un assemblage selon l'invention ;
- la figure 5 est une vue de face de l'assemblage de la figure 4, vu du côté de la concavité des inserts de renfort ;
- la figure 6 est une vue en coupe selon la ligne A-A de la figure 5;
- la figure 7 est une vue en coupe selon le plan de coupe C-C de la figure 6 ;
- la figure 8 est une vue en coupe selon le plan de coupe D-D de la figure 6 ;
- la figure 9 est une vue en coupe de l'assemblage et des outillages de surmoulage du matériau polymère.

Sur les figures, les mêmes éléments sont désignés par les mêmes références.

Dans la présente description, les termes avant, arrière, supérieur, inférieur, font référence aux directions avant et arrière du véhicule, lorsque l'assemblage est monté sur un véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

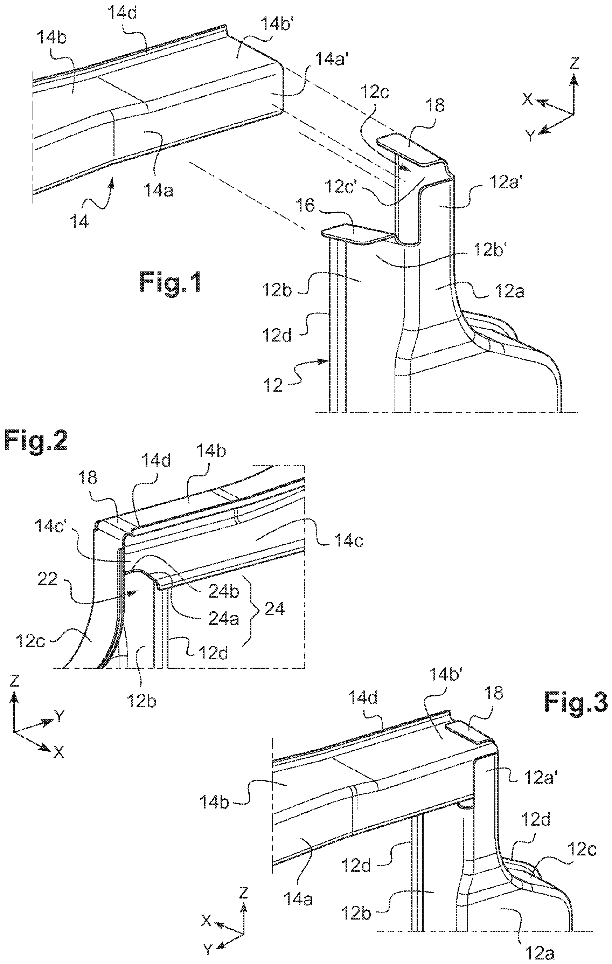

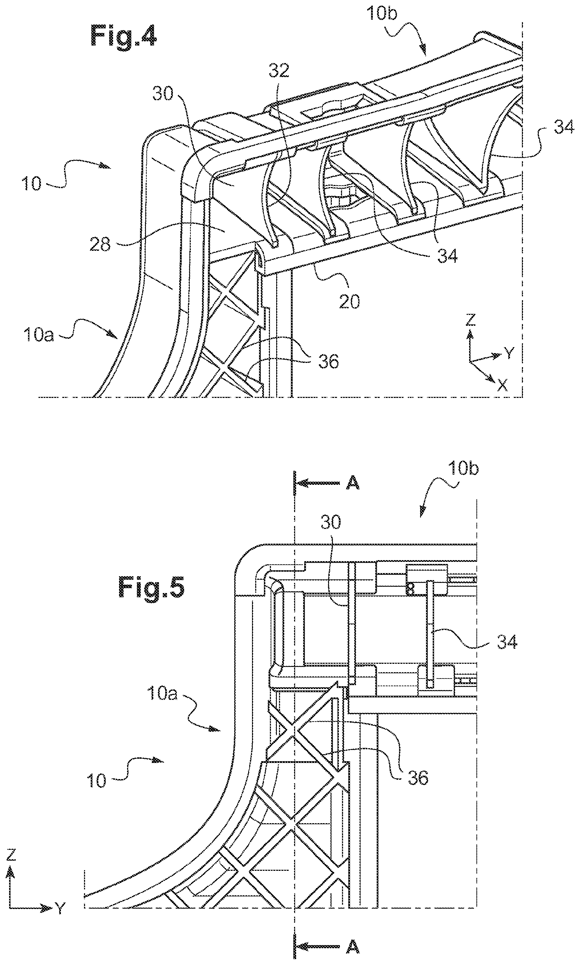

La figure 1 représente un premier insert renfort de longitudinal 12 s'étendant verticalement et un deuxième insert de renfort longitudinal 14 s'étendant horizontalement. Tel que représenté sur les figures 2 et 3, les directions longitudinales de ces inserts de renfort, 12, 14, sont perpendiculaires lorsqu'ils occupent la position dans laquelle le matériau polymère va être surmoulé. Les premier et deuxième inserts de renfort 12, 14, vont permettre de réaliser un assemblage 10 selon un mode de réalisation de l'invention, tel que représenté sur les figures 4 à 8.

Chaque insert de renfort 12, 14, présente une section transversale ouverte concave. Ici, il s'agit d'une forme sensiblement en Ω, formé par des parois planes. Autrement dit, l'insert de renfort est formé de plusieurs parois planes reliées les unes aux autres par un bord longitudinal, de section transversale similaire à un Ω.

Ainsi, le premier insert 12 comprend une paroi de fond 12a et deux parois latérales 12b, 12c, de part et d'autre de la paroi de fond 12a (fig. 1-3). Chacune de ces parois latérales 12b, 12c, présente un rebord 12d s'étendant parallèlement à la paroi de fond 12a, à l'extérieur de l'insert. De manière similaire, le deuxième insert 14 comprend une paroi de fond plane 14a encadrée par deux parois latérales 14b, 14c, chacune de ces parois latérales 14b et 14c présentant un rebord 14d dirigé vers l'extérieur de l'insert. Chaque paroi latérale est ainsi reliée à un bord longitudinal de la paroi de fond à laquelle elle est rattachée.

Dans l'exemple représenté, en position de montage avant surmoulage du matériau polymère (fig.3, 4), la paroi de fond 12a du premier insert de renfort 12 s'étend parallèlement à la paroi de fond 14a du deuxième insert de renfort 14, sensiblement dans un même plan. En outre, les inserts de renfort 12, 14 sont orientés de sorte que la concavité qu'ils définissent soit dirigée dans une même direction (axe X des figures). Ceci permet de faciliter les opérations de surmoulage du matériau polymère sur les inserts de renfort 12, 14.

Les inserts de renfort 12, 14 étant dans leur position relative d'assemblage (figures 2-4), les parois latérales 14c et 12b sont dites parois latérales internes, les parois latérales 14b, 12c sont dites paroi latérales externes de l'assemblage 10.

Chaque insert va maintenant être décrit séparément en référence aux figures.

Selon un premier aspect de l'invention, le premier insert de renfort 12, présente au moins deux pattes de maintien coopérant avec une extrémité du deuxième insert de renfort afin de bloquer tout mouvement de ce dernier suivant la direction longitudinale du premier insert de renfort 12, à savoir l'axe Z des figures.

En outre, le matériau polymère recouvre les inserts de renfort 12, 14 au moins au niveau de leurs extrémités de contact, c'est-à-dire au moins au niveau de leur jonction.

Dans l'exemple représenté sur les figures, le premier insert de renfort 12 présente deux pattes de maintien 16, 18. Ces pattes de maintien, 16, 18, sont ici en appui plan contre les parois latérales du deuxième insert de renfort 14, à savoir une paroi latérale interne 14c et une paroi latérale externe 14b, respectivement, tel que visible sur les figures et plus particulièrement sur les figures 3, 6 et 8.

Dans l'exemple représenté, les pattes de maintien 16, 18 sont en appui contre les faces de ces parois latérales 14c, 14b situées du côté convexe du deuxième insert de renfort 14.

Les pattes de maintien 16, 18 sont ici solidaires des parois latérales 12c, 12b, respectivement, du premier insert de renfort 12, plus précisément des portions d'extrémité 12c' et 12b' des ces parois latérales 12c, 12b. En particulier, elles sont réalisées d'une pièce avec ces parois 12c, 12b dont elles forment un rebord sensiblement à angle droit.

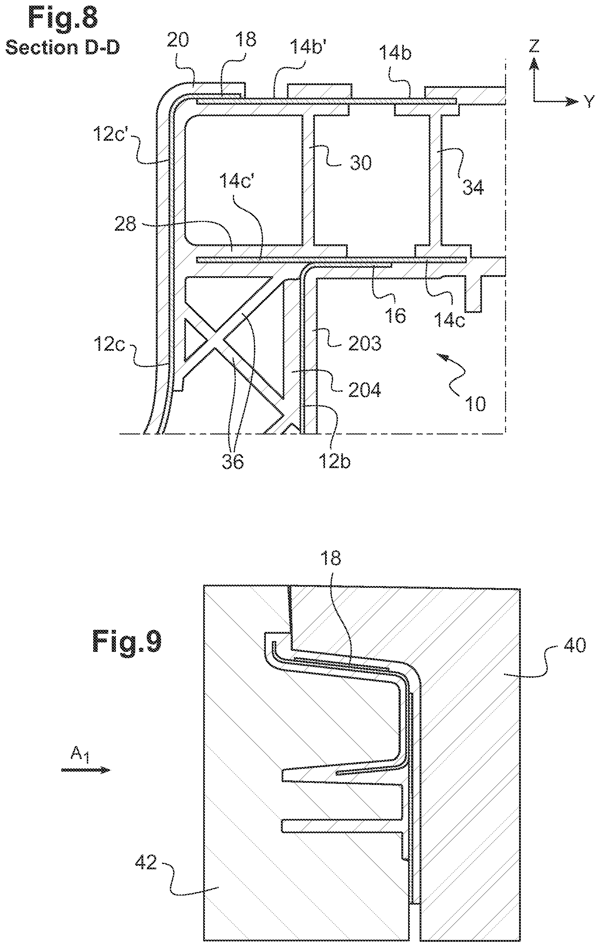

Pour une réalisation plus simple, ces pattes de maintien 16, 18 s'étendent dans une même direction, ici suivant l'axe Y des figures en position de montage des premier et deuxième inserts de renfort 12, 14. On notera en outre que la paroi latérale interne 12b du premier insert de renfort 12 présente une longueur plus courte, suivant l'axe Z des figures, autrement dit suivant la direction longitudinale du premier insert de renfort 12, que la deuxième paroi latérale externe 12c de ce premier insert de renfort (figures 1 et 8). La différence de longueurs suivant l'axe Z entre les parois latérales 12b, 12c du premier insert de renfort 12 correspond sensiblement à la distance séparant les parois latérales 14c, 14b du deuxième insert de renfort 14 lorsque le deuxième insert de renfort 14 coopère avec le premier insert de renfort 12 tel que visible sur les figures 2, 3 et 8 plus particulièrement.

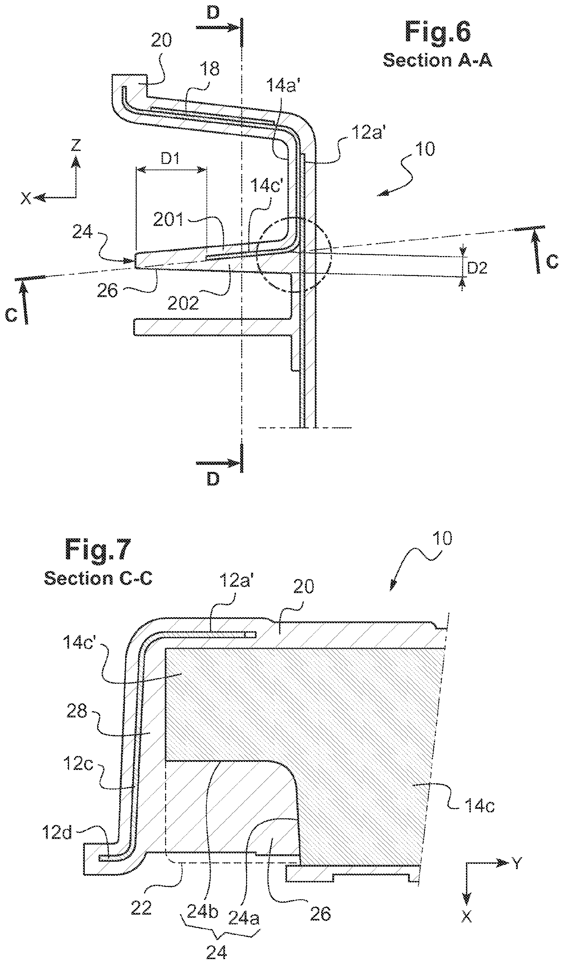

Ainsi, lorsque les premier et deuxième inserts de renfort 12, 14 sont en position de montage (figures 2, 3), l'extrémité du deuxième insert de renfort 14 vient se loger entre les pattes de maintien 16, 18 du premier insert de renfort 12 lesquelles sont respectivement en appui sur des portions d'extrémités 14c', 14b' des parois latérales 14c, 14b (figures 3 et 8). En outre, une portion d'extrémité 12a' de la paroi de fond 12a du premier insert de renfort 12 est en appui plan contre une portion d'extrémité 14a' de la paroi de fond 14a de l'extrémité du deuxième insert de renfort 14 du côté convexe de ce dernier (figures 3, 6). Ainsi, le deuxième insert de renfort est bloqué en translation suivant l'axe Z par le premier insert de renfort 12, plus particulièrement par ses pattes de maintien 16, 18, la coopération en appui plan des portions d'extrémité 12a', 14a' des parois de fond 12a, 14a, bloquant tout mouvement dans une des directions de l'axe X. Ainsi, toute rotation relative des deux inserts de renfort 12, 14 par rapport à l'axe Z et l'axe Y des figures est bloqué.

Dans la position de montage des premier et deuxième inserts de renfort 12, 14 (figures 2, 3), une portion d'extrémité 12c' de la paroi latérale externe 12c du premier insert de renfort 12 s'étend en regard de l'extrémité du deuxième insert de renfort 14, sensiblement perpendiculairement à la direction longitudinale de ce dernier, l'autre paroi latérale 12b du premier insert de renfort présentant une portion d'extrémité 12b' s'étendant en regard d'une portion d'extrémité de la paroi latérale interne 14c du deuxième insert de renfort 14.

On notera ainsi que l'extrémité du deuxième insert de renfort 14 est emboîtée à l'intérieur de l'extrémité du premier insert de renfort 12 avant surmoulage du matériau polymère. Ceci permet d'obtenir une liaison robuste des deux inserts de renfort 12, 14 après surmoulage du matériau polymère. Ce dernier est en effet appliqué au niveau de la jonction des deux inserts de renfort tel que visible sur les figures 4 à 8, en enrobant notamment les parties des inserts de renfort en contact. Autrement dit, les pattes de maintien 16 18 sont entièrement noyées dans le matériau polymère, tel que visible plus particulièrement sur les figures 6 et 8, ce qui permet d'assurer l'étanchéité entre les deux inserts de renfort 12, 14 au niveau de leur jonction et de rigidifier l'assemblage. Sur les figures, la couche de polymère est identifiée par la référence 20.

Selon un deuxième aspect de l'invention, la paroi latérale interne 14c du deuxième insert de renfort 14 présente une portion d'extrémité 14c' située entièrement à l'intérieur de la concavité définie par le premier insert de renfort 12 lorsque les deux inserts de renfort 12, 14 sont en position de montage (figures 2, 3, 6). Cette portion d'extrémité 14c' présente un coin 22 (fig. 2, traits pointillés de la figure 7), lequel est découpé suivant une ligne 24a, 24b afin de former une encoche 24 dans cette portion d'extrémité 14c' (figures 2, 6, 7). On notera que du fait de la forme particulière de l'insert de renfort 14, les parois latérales présentent chacune un unique coin, défini comme la jonction entre deux bords libres d'une paroi.

Cette encoche 24 va permettre de faciliter le démoulage de l'outillage utilisé pour surmouler le matériau polymère, et ainsi de réduire l'épaisseur de matériau polymère surmoulé sur les deux inserts de renfort 12, 14. En outre, on notera que des couches de matériau polymère 201, 202 recouvrent les deux faces opposées de cette portion d'extrémité 14c' (figure 6), et qu'une nervure 26 de matériau polymère s'étend dans le prolongement de ces couches 201, 202 afin de combler partiellement au moins cette encoche 24, ici complètement. Cette nervure 26 est plus particulièrement visible sur les figures 6 et 7.

L'extrémité du deuxième insert de renfort 14 s'étend ainsi au travers par la concavité définie par le premier insert de renfort 12 depuis une paroi latérale interne 12b de celui-ci jusqu'à une distance prédéterminée de la paroi latérale externe 12c du premier insert de renfort 12. Malgré cette absence de contact (visible figures 6 et 8), l'espace libre entre le deuxième insert de renfort 14, notamment sa paroi latérale interne 14c, et le premier insert de renfort 12, notamment sa paroi latérale externe 12c, peut être entièrement comblé par un matériau polymère formant en partie la nervure 26, renforçant ainsi la rigidité de l'assemblage 10.

On notera notamment que la nervure 26 s'étend jusqu'à une couche de matériau polymère recouvrant la paroi latérale externe 12c du premier insert de renfort sur une face intérieure de celle-ci, du côté de la concavité du premier insert de renfort, tel que visible figure 7.

La nervure 26 est avantageusement conformée de sorte que la quantité de matériau polymère la constituant est sensiblement égale à la quantité de matériau polymère formant les dites couches 201, 202 (figure 6).

Tel que visible sur la figure 6, la dimension D1 de l'encoche 24 suivant l'axe X des figures est ainsi déterminée de sorte que la quantité de matière de la nervure 26 et des couches 201, 202 soit sensiblement équivalente. Ceci permet de minimiser la distance D2 suivant l'axe Z entre le pied de la paroi latérale interne 14c du deuxième insert de renfort, et la face externe de la couche de matériau polymère 202. Une telle réduction de l'épaisseur de matériau polymère au niveau de la jonction entre les deux inserts de renfort permet de limiter les risques de formation de retassures et de défaut lors du surmoulage de la matière plastique, améliorant ainsi la robustesse de l'assemblage 10. A titre d'exemple, la dimension D1 de l'encoche 24, correspondant à la dimension de la nervure 26 suivant la direction X, est de l'ordre de 20 à 25 mm environ pour un insert de renfort 14 d'une profondeur d'une soixantaine de mm environ. De manière plus générale, la dimension de l'encoche 24 mesurée perpendiculairement au fond du deuxième insert de renfort peut représenter de 0,25 à 0,5 % de la dimension correspondante de la portion d'extrémité 14c' du deuxième insert de renfort. La dimension de l'encoche 24, mesurée perpendiculairement à la paroi de fond 12a du premier insert de renfort, peut représenter de 0,5 à 0,99 % de la dimension correspondante de la portion d'extrémité 14c' du deuxième insert de renfort. Ces différentes dimensions peuvent être aisément adaptées par l'homme du métier afin d'optimiser les épaisseurs du matériau polymère surmoulé sur les deux inserts de renfort.

On notera que l'angle formé entre les bords 24a et 24b de l'encoche 24 est légèrement supérieur à 90° (figure 7), ce qui peut faciliter le démoulage du matériau polymère. De manière similaire, l'angle entre la nervure 26 et la paroi de fond 14a du deuxième insert polymère est également supérieur à l'angle droit.

Selon un troisième aspect de l'invention, chaque insert de renfort 12, 14, présente au moins une nervure 28, 30 en matériau polymère joignant ses parois latérales 14b, 14c, 12b, 12c, et s'étendant dans le prolongement de la paroi latérale interne de l'autre insert de renfort, ou dans le prolongement d'une couche de matériau polymère recouvrant la paroi latérale interne de l'autre insert de renfort.

Ces nervures 28, 30 sont visibles plus particulièrement sur les figures 4 et 8. La nervure 28 s'étend ainsi entre les parois latérales interne 12b et externe 12c du premier insert de renfort 12, dans le prolongement de la paroi latérale interne 14c du deuxième insert de renfort 14. On notera ainsi que cette nervure 28 englobe la nervure 26 décrite plus haut, et est formée en partie par le surmoulage de la portion d'extrémité 14c' de la paroi latérale interne 14c du deuxième insert de renfort (figure 7). La nervure 30 s'étend entre les parois latérales interne 14c et externe 14b du deuxième insert de renfort 14, dans le prolongement de la paroi latérale interne 12b du premier insert de renfort 12. Tel que visible plus particulièrement sur la figure 8, la nervure 30 s'étend ici dans le prolongement d'une couche 203 de matériau polymère recouvrant la paroi latérale interne 12b du premier insert de renfort, du côté de sa convexité (figure 8). Toutefois, cette nervure 30 pourrait tout aussi bien s'étendre dans le prolongement direct de la paroi latérale interne 12b ou dans le prolongement d'une couche 204 de matériau polymère recouvrant la paroi latérale interne 12b du premier insert de renfort, du côté de sa concavité.

Les nervures 28, 30 peuvent être solidaires des parois de fond 14a, 12a respectivement.

Tel que visible plus particulièrement sur la figure 8, ces nervures 28, 30 définissent avec les parois latérales externes 14b, 12c des inserts de renfort, un volume en forme de parallélépipède dont les faces latérales internes sont recouvertes d'une couche continue de matériau polymère. Cet agencement permet de renforcer la robustesse de l'assemblage 10. Ici, le volume ainsi défini présente une section dans le plan ZY sensiblement carrée.

Tel que visible sur la figure 4, on notera en outre que la nervure 30 présente un bord libre 32 concave dont la concavité est dirigée dans une direction opposée de la paroi de fond 14a du deuxième insert de renfort 14. Ceci peut faciliter la réalisation de la nervure, notamment l'injection du matériau polymère lors du surmoulage.

L'assemblage 10 selon l'invention peut en outre comprendre une pluralité de nervures supplémentaires 34 s'étendant par exemple sensiblement parallèlement à la nervure 30, à l'intérieur de la concavité définie par le deuxième insert 14, et une pluralité de nervures 36 entrecroisées s'étendant perpendiculairement à la paroi de fond 12a du premier insert de renfort 12, à l'intérieur de la concavité définie par le premier insert 12, ces différentes nervures 34, 36 participent à la rigidification de l'assemblage 10.

Tel que visible également sur les figures, on notera que la couche de matériau polymère ne recouvre pas uniformément la totalité de la surface des deux inserts de renfort 12, 14, mais recouvre une partie notable au niveau de la jonction de ces inserts tel que précédemment décrit. Notamment, le matériau polymère recouvre ainsi entièrement les pattes de maintien 16, 18, et recouvre sensiblement la totalité du volume intérieur défini par les nervures 28, 30 et les parois latérales externes 14b, 12c défini précédemment, à savoir le volume de jonction entre les premier et deuxième inserts de renfort 12, 14.

Un exemple de procédé de fabrication d'un assemblage selon l'invention est maintenant décrit en référence à la figure 9.

Ce surmoulage est de préférence réalisé par injection dans un outillage réalisé en plusieurs parties.

Une première partie d'outillage, ou de moule, 40 également appelée matrice, reçoit les inserts de renfort 12, 14 suivant une direction Al perpendiculaire aux directions longitudinales des premier et deuxième inserts de renfort 12, 14. Cette première partie de moule 40 est refermée par une deuxième partie de moule 42, également appelée poinçon qui vient s'emboîter sur la première partie de moule 40 suivant cette direction Al. Une fois le moule fermé, le matériau polymère peut être injecté à l'intérieur de manière à recouvrir les premier et deuxième inserts de renfort aux endroits prévus précédemment décrits. A l'issue de l'étape d'injection, les parties de moule 40, 42 sont séparées par écartement dans une direction parallèle à la direction Al. On obtient ainsi de manière simple et rapide un assemblage 10 robuste, sans étape de pré assemblage des inserts de renfort 12, 14, dans la mesure où le positionnement de ceux-ci à l'intérieur du moule, préalablement au surmoulage, permet de les maintenir dans la position représentée sur les figures 2 et 3 avant l'injection du polymère.

Sur les figures de l'exemple décrit, le premier insert de renfort 12 forme un montant vertical 10a de FAT de véhicule automobile alors que le deuxième insert de renfort 14 forme une traverse supérieure 10b de la FAT de véhicule automobile. La FAT peut comprendre un autre montant vertical à l'autre extrémité de la traverse supérieure, cet autre montant vertical résultant d'assemblage d'un autre premier insert de renfort avec l'autre extrémité du deuxième insert de renfort 14, cet assemblage étant de préférence conforme à la présente invention. Les parties inférieures des montants sont fixées à une traverse inférieure de la FAT (non représentée) par un assemblage similaire ou par tout autre assemblage adapté.

## Revendications

1. Assemblage (10) d'un premier insert de renfort longitudinal (12) et d'un deuxième insert de renfort longitudinal (14) par un matériau polymère (20) les recouvrant au moins partiellement, chaque insert de renfort (12, 14) présentant une paroi de fond (12a, 14a) et deux parois latérales (12b, 12c; 14b, 14c), chaque paroi latérale (12b, 12c; 14b, 14c) étant reliée à un bord longitudinal de la paroi de fond (12a, 14a) de sorte qu'un insert de renfort (12, 14) présente une section transversale ouverte concave, notamment sensiblement en forme de U ou Ω, les directions longitudinales desdits inserts de renfort (12, 14) étant sensiblement perpendiculaires, **caractérisé en ce qu'**une extrémité du premier insert de renfort (12) présente au moins deux pattes de maintien (16, 18) coopérant avec une extrémité du deuxième insert de renfort (14) afin de bloquer tout mouvement de ce dernier suivant la direction longitudinale du premier insert de renfort (12) et **en ce que** ledit matériau polymère (20) recouvre lesdits inserts de renfort (12, 14) au moins au niveau de leurs extrémités en contact.

2. Assemblage (10) selon la revendication 1, **caractérisé en ce que** les inserts de renfort (12, 14) sont orientés de sorte que leur concavité soit dirigée dans une même direction.

3. Assemblage (10) selon l'une quelconque des revendications 1 ou 2, **caractérisé en ce que** les pattes de maintien (16, 18) sont en appui plan contre les parois latérales (14c, 14b) du deuxième insert de renfort (14), notamment en appui plan contre une face située du côté convexe du deuxième insert de renfort (14).

4. Assemblage (10) selon l'une quelconque des revendications 1 à 3, **caractérisé en ce qu'**une partie (12a') de la paroi de fond (12a) de ladite extrémité du premier insert de renfort (12) est en appui plan contre une partie (14a') de la paroi de fond (14a) de ladite extrémité du deuxième insert de renfort (14), du côté convexe de ce dernier.

5. Assemblage (10) selon l'une quelconque des revendications 1 à 4, **caractérisé en ce qu'**au moins une patte de maintien (16, 18) est solidaire de chacune des parois latérales (12b, 12c) du premier insert de renfort.

6. Assemblage (10) selon l'une quelconque des revendications 1 à 5, **caractérisé en ce qu'**une partie (12c') de la paroi latérale (12c) de l'extrémité du premier insert de renfort (12) s'étend en regard de l'extrémité du deuxième insert de renfort (14), sensiblement perpendiculairement à la direction longitudinale de ce dernier, l'autre paroi latérale (12d) de ladite extrémité du premier insert de renfort s'étendant sensiblement perpendiculairement à une paroi latérale du deuxième insert de renfort, en butée contre celle-ci.

7. Assemblage (10) selon la revendication 6, **caractérisé en ce que** chaque patte de maintien (16, 18) est solidaire d'un bord d'une paroi latérale (12b, 12c) du premier insert de renfort, lesdites parois latérales (12b, 12c) présentant une différence de longueur correspondant sensiblement à la distance séparant les parois latérales (14b, 14c) du deuxième insert de renfort mesurée parallèlement à la direction longitudinale du premier insert de renfort.

8. Assemblage (10) selon l'une quelconque des revendications 1 à 7, **caractérisé en ce que** les pattes de maintien (16, 18) s'étendent dans une même direction.

9. Assemblage (10) selon l'une quelconque des revendications 1 à 8, **caractérisé en ce que** les inserts de renfort (12, 14) sont métalliques ou en matériau polymère.

10. Face avant technique de véhicule automobile comprenant au moins un assemblage (10) selon l'une quelconque des revendications 1 à 9, dans laquelle le deuxième insert de renfort (14) de l'assemblage forme une traverse horizontale (10b), notamment supérieure, et le premier insert de renfort (12) de l'assemblage forme un montant vertical (10a).

## Patentansprüche

1. Zusammenbau (10) eines ersten Längsverstärkungseinsatzes (12) und eines zweiten Längsverstärkungseinsatzes (14) durch ein sie zumindest teilweise bedeckendes Polymermaterial (20), wobei jeder Verstärkungseinsatz (12, 14) eine Rückwand (12a, 14a) und zwei Seitenwände (12b, 12c; 14b, 14c) aufweist, wobei jede Seitenwand (12b, 12c; 14b, 14c) mit einem Längsrand der Rückwand (12a, 14a) verbunden ist, so dass ein Verstärkungseinsatz (12, 14) einen konkaven offenen Querschnitt aufweist, insbesondere im Wesentlichen in Form eines U oder Ω, wobei die Längsrichtungen der Verstärkungseinsätze (12, 14) im Wesentlichen lotrecht sind, **dadurch gekennzeichnet, dass** ein Ende des ersten Verstärkungseinsatzes (12) mindestens zwei Haltelaschen (16, 18) aufweist, die mit einem Ende des zweiten Verstärkungseinsatzes (14) zusammenwirken, um jede Bewegung dieses letzteren in der Längsrichtung des ersten Verstärkungseinsatzes (12) zu blockieren, und dass das Polymermaterial (20) die Verstärkungseinsätze (12, 14) mindestens im Bereich ihrer in Kontakt stehenden Enden bedeckt.

2. Zusammenbau (10) nach Anspruch 1, **dadurch gekennzeichnet, dass** die Verstärkungseinsätze (12, 14) so ausgerichtet sind, dass ihre Konkavität in die gleiche Richtung weist.

3. Zusammenbau (10) nach einem der Ansprüche 1 oder 2, **dadurch gekennzeichnet, dass** die Haltelaschen (16, 18) in ebener Auflage gegen die Seitenwände (14c, 14b) des zweiten Verstärkungseinsatzes (14) sind, insbesondere in ebener Auflage gegen eine Seite, die sich auf der konvexen Seite des zweiten Verstärkungseinsatzes (14) befindet.

4. Zusammenbau (10) nach einem der Ansprüche 1 bis 3, **dadurch gekennzeichnet, dass** ein Teil (12a') der Rückwand (12a) des Endes des ersten Verstärkungseinsatzes (12) in ebener Auflage gegen einen Teil (14a') der Rückwand (14a) des Endes des zweiten Verstärkungseinsatzes (14) auf dessen konvexer Seite ist.

5. Zusammenbau (10) nach einem der Ansprüche 1 bis 4, **dadurch gekennzeichnet, dass** mindestens eine Haltelasche (16, 18) fest mit jeder der Seitenwände (12b, 12c) des ersten Verstärkungseinsatzes verbunden ist.

6. Zusammenbau (10) nach einem der Ansprüche 1 bis 5, **dadurch gekennzeichnet, dass** ein Teil (12c') der Seitenwand (12c) des Endes des ersten Verstärkungseinsatzes (12) sich gegenüber dem Ende des zweiten Verstärkungseinsatzes (14) im Wesentlichen lotrecht zur Längsrichtung dieses letzteren erstreckt, wobei die andere Seitenwand (12d) des Endes des ersten Verstärkungseinsatzes sich im Wesentlichen lotrecht zu einer Seitenwand des zweiten Verstärkungseinsatzes in Anschlag gegen diese erstreckt.

7. Zusammenbau (10) nach Anspruch 6, **dadurch gekennzeichnet, dass** jede Haltelasche (16, 18) fest mit einem Rand einer Seitenwand (12b, 12c) des ersten Verstärkungseinsatzes verbunden ist, wobei die Seitenwände (12b, 12c) einen Längenunterschied aufweisen, der im Wesentlichen dem die Seitenwände (14b, 14c) des zweiten Verstärkungseinsatzes trennenden Abstand gemessen parallel zur Längsrichtung des ersten Verstärkungseinsatzes entspricht.

8. Zusammenbau (10) nach einem der Ansprüche 1 bis 7, **dadurch gekennzeichnet, dass** die Haltelaschen (16, 18) sich in der gleichen Richtung erstrecken.

9. Zusammenbau (10) nach einem der Ansprüche 1 bis 8, **dadurch gekennzeichnet, dass** die Verstärkungseinsätze (12, 14) metallisch oder aus Polymermaterial sind.

10. Frontendmodul eines Kraftfahrzeugs, das mindestens einen Zusammenbau (10) nach einem der Ansprüche 1 bis 9 enthält, wobei der zweite Verstärkungseinsatz (14) des Zusammenbaus einen insbesondere oberen waagrechten Querträger (10b) bildet, und der erste Verstärkungseinsatz (12) des Zusammenbaus eine senkrechte Säule (10a) bildet.

## Claims

1. Assembly (10) of a first longitudinal reinforcement insert (12) and a second longitudinal reinforcement insert (14) joined together by a polymer material (20) at least partially covering them, each reinforcement insert (12, 14) having a bottom wall (12a, 14a) and two side walls (12b, 12c; 14b, 14c), each side wall (12b, 12c; 14b, 14c) being connected to a longitudinal edge of the bottom wall (12a, 14a) such that a reinforcement insert (12, 14) has a concave open cross section, notably being substantially U- or Q-shaped, the longitudinal directions of said reinforcement inserts (12, 14) being substantially perpendicular, **characterized in that** one end of the first reinforcement insert (12) has at least two holding tabs (16, 18) that cooperate with one end of the second reinforcement insert (14) in order to prevent any movement of the latter in the longitudinal direction of the first reinforcement insert (12), and **in that** said polymer material (20) covers said reinforcement inserts (12, 14) at least at their ends in contact.

2. Assembly (10) according to Claim 1, **characterized in that** the reinforcement inserts (12, 14) are oriented such that their concavities are directed in one and the same direction.

3. Assembly (10) according to either one of Claims 1 and 2, **characterized in that** the holding tabs (16, 18) rest flat against the side walls (14c, 14b) of the second reinforcement insert (14), notably rest flat against a face situated on the convex side of the second reinforcement insert (14).

4. Assembly (10) according to any one of Claims 1 to 3, **characterized in that** a part (12a') of the bottom wall (12a) of said end of the first reinforcement insert (12) rests flat against a part (14a') of the bottom wall (14a) of said end of the second reinforcement insert (14), on the convex side of the latter.

5. Assembly (10) according to any one of Claims 1 to 4, **characterized in that** at least one holding tab (16, 18) is integral with each of the side walls (12b, 12c) of the first reinforcement insert.

6. Assembly (10) according to any one of Claims 1 to 5, **characterized in that** a part (12c') of the side wall (12c) of the end of the first reinforcement insert (12) extends next to the end of the second reinforcement insert (14), substantially perpendicularly to the longitudinal direction of the latter, the other side wall (12d) of said end of the first reinforcement insert extending substantially perpendicularly to a side wall of the second reinforcement insert, in abutment against the latter.

7. Assembly (10) according to Claim 6, **characterized in that** each holding tab (16, 18) is integral with an edge of a side wall (12b, 12c) of the first reinforcement insert, said side walls (12b, 12c) exhibiting a difference in length corresponding substantially to the distance between the side walls (14b, 14c) of the second reinforcement insert measured parallel to the longitudinal direction of the first reinforcement insert.

8. Assembly (10) according to any one of Claims 1 to 7, **characterized in that** the holding tabs (16, 18) extend in one and the same direction.

9. Assembly (10) according to any one of Claims 1 to 8, **characterized in that** the reinforcement inserts (12, 14) are made of metal or polymer material.

10. Technical front end of a motor vehicle, comprising at least one assembly (10) according to any one of Claims 1 to 9, wherein the second reinforcement insert (14) of the assembly forms a horizontal, notably upper, cross member (10b) and the first reinforcement insert (12) of the assembly forms a vertical upright (10a).
